Europäisches Patentamt

European Patent Office

Office européen des brevets

(19)

(11) Numéro de publication: **0 009 470**
**A1**

(12) # DEMANDE DE BREVET EUROPEEN

(21) Numéro de dépôt: **79830025.7**

(22) Date de dépôt: **21.08.79**

(51) Int. Cl.³: **B 21 B 31/24,** B 23 Q 1/26

(30) Priorité: **24.08.78 IT 4551978**

(43) Date de publication de la demande: **02.04.80**
**Bulletin 80/7**

(84) Etats contractants désignés: **AT BE CH DE FR GB LU NL SE**

(71) Demandeur: **Gabrielli, Ernesto, Via Vacchereccia, 3, I-50122 Firenze (IT)**

(72) Inventeur: **Gabrielli, Ernesto, Via Vacchereccia, 3, I-50122 Firenze (IT)**

(74) Mandataire: **Martini, Lazzaro, Ufficio Brevetti Ing. Lazzaro Martini Via Brunelieschi, 1, I-50123 Firenze (IT)**

(54) **Méthode et dispositif permettant l'obtention de déplacements coaxiaux même micrométriques entre deux parties mobiles d'une machine même sous une sollicitation antagoniste très forte.**

(57) Pour l'obtention de déplacements coaxials même micromètriques entre deux parties mobiles (1) et (2) d'une machine même sous une sollicitation antagoniste très forte on utilise au moins un arbre de manoeuvre (5) pourvu de deux portions saillant, filetées (7) et (8) ayant le filet de sens égal, mais de pas different et engageant coaxialment les deux parties mobiles de la machine au moyen de deux écroux (9) et (10) ayant le même filetage des correspondantes portions filetées (7) et (8) de l'arbre (5); le roulement de l'arbre (5) réalise le déplacement coaxial désiré entre les parties (1) et (2) avec une vitesse differente et tel que à chaque tour de l'arbre (5) il est égal à la difference entre les pas des portions filetées (7) et (8) de l'arbre (5).

0009470

- 1 -

Léthode et dispositif permettant l'obtention de
déplacements coaxials même micromètriques entre
deux parties mobiles d'une machine même sous une
sollicitation antagoniste très forte.

L'invention concerne un méthode et un dispositif
permettant l'obtention de déplacements coaxials
même micromètriques relatifs entre deux parties
mobiles de machines; un arbre roulant de manoeuvre ayant deux portions saillant filetées avec
filet de même sens, mais de pas different, engage
coaxialment les deux parties mobiles de la machine au moyen de deux écroux dont le filetage à les
mêmes caracteristiques de la correspondant portion filetée de l'arbre de manoeuvre.
Nombreuses sont les machines, les équipements,
les appareils exigeant un réglage fin et précis
de la distance entre deux organes opératifs tels
les cylindres des laminoirs ou des calandres et
il est nécessaire accoupler la sensibilité la
plus grande de réglage de la distance réciproque
entre ces organes avec la plus grande résistence
mécanique des dispositifs de manoeuvre même.

0009470

Dans la technique actuelle le réglage de ces déplacements est obtenu au moyen de vis de manoeuvre réalisant, à chaque tour des vis, un déplacement des deux parties mobiles de la machine dont la valeur est égale au pas des vis. Si ces vis sont aussi appellées à faire fonction d'organes d'assemblage des parties mobiles de la machine, alors la sollicitation antagoniste que ces vis doivent supporter conditionne le dimensionement du filet des vis de manoeuvre et donc aussi du pas qui, à son tour, détermine le déplacement que l'on peut obtenir entre les deux parties mobiles de la machine.

On connaît que pour augmenter la sensibilité de tels dispositifs on doit utiliser des mécanismes de démultiplication comme par ex.le couple vis sans fin roue hélicoidale. Dans ce cas, si on appelle Z le nombre des dents de la roue hélicoidale, P le pas de la vis de manoeuvre et S le déplacement entre les deux parties mobiles, on a: $S = \dfrac{P}{Z}$; donc pour réaliser le déplacement S = 0,04 mm avec un tour d'une vis de manoeuvre de résistance élevée comme par ex.avec le pas P = 40 mm, il sera nécéssaire une roue de démultiplication avec le nombre de dents Z = 1000.

En outre, les parties mobiles légères et aussi extrèmement précis des équipements optiques et scientifiques en général ne peuvent pas être compliquées avec des mécanismes de démultiplication; pour célà, à présent, on utilise des vis avec un pas très court et ceci est un inconvenient pour la difficulté d'obtention, pour la toute petite

- 3 -                    0009470

resistance mécanique, pour la courte durée à
cause de l'usure.

La présente invention a pour but d'apporter un
remède à cet inconvenient. L'invention, telle qu'
elle est caractérisée dans les revendications,
résout le probleme consistant à réaliser des déplacements coaxials même micromètriques entre
deux parties mobiles d'une machine même sous
une sollicitation antagoniste très forte, au
moyen du roulement d'au moins un arbre de manoeuvre
qui est pourvu de deux portions saillantes, filetées ayant le filet du même sens, mais de pas
different et qui engage coaxialment les deux parties mobiles de la machine au moyen de deux écroux
dont le filetage est le même de la correspondante
portion filétée de l'arbre de manoeuvre; le roulement de l'arbre de manoeuvre réalise le déplacement coaxial des deux parties mobiles de la machine avec une vitesse de translation differente
et tel que, à chaque tour de l'arbre de manoeuvre,
ce déplacement a la même vdeur de la différence
entre les pas du filetage des deux portions filétées de l'arbre de manoeuvre.

Les avantages obtenus grâce à cette invention consistent essentiellement en ceci que les portions
filétées de l'arbre de manoeuvre sont réalisées
avec deux pas dont la valeur est choisi sans limitations et dont la différence est le déplacement voulu entre les deux parties mobiles de la
machine pour chaque tour la l'arbre de manoeuvre;
que les deux portions filétées sont réalisées avec
le dimensionnement nécessaire pour supporter une

0009470

sollicitation antagoniste quelconque entre les deux parties mobiles de la machine sans tenir compte du déplacement à obtenir pour chaque tour de l'arbre de manoeuvre. Les déplacements réalisées peuvent être micromètriques, même avec des vis de resistance élevée, c'est à dire ayant un filetage avec un pas long et pour célà avec les bénéfices de la simplicité de construction, du bas prix, de la précision et de la grande resistence de tout le dispositif.

Dans ce qui suit l'invention sera exposée plus en détail à l'aide du dessin représentant seulement un mode d'exécution.

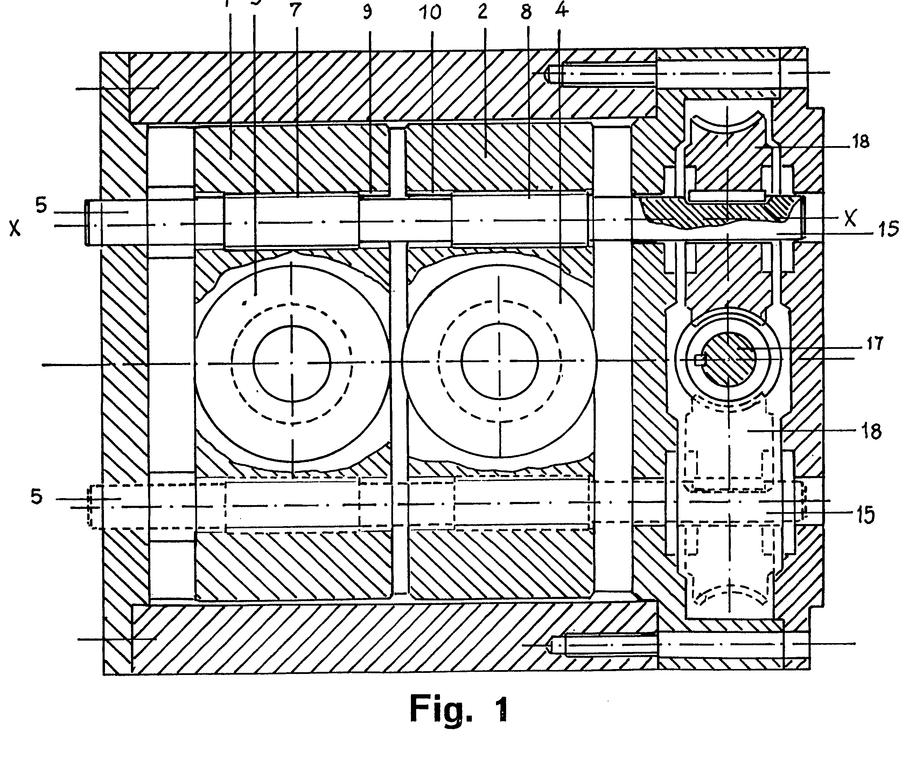

La Figure 1 représente, en coupe longitudinale, une portion d'un laminoir pourvu d'un dispositif selon l'invention avec le mécanisme de démultiplication vis sans fin- roue hélicoïdale.

La machine représentée comprend les deux parties (1)et(2)mobiles entre elles dans la direction xx et supportant les cylindres(3)et(4) respectivement; les parties(1)et(2)sont assemblées entre elles au moyen des arbres de manovre(5)parallèles à la direction xx et ayant deux portions saillantes, filétées(7)et(8)avec le filet de même sens,mais de pas(P7)et(P8)differents et qui s'engagent dans les écroux(9)et(10)correspondants des parties mobiles(1)et(2)respectivement.

Les arbres de manoeuvre(5)sont roulé en jouant leur bouts(15)directement au moyen d'un volant ou par l'entremise d'un dispositif de démultiplication composé d'un vis sans fin(17)et d'une roue hélicoidale(18). Le roulement dans le même sens des arbres de manoeuvre(5) réalise le déplacement des parties mobiles(1)et(2)dans la direction xx avec une vitesse differente et à chaque tour d'eux, le déplacement entre(1)et(2) et donc même entre les cylindres(3)et(4), acquiert la valeur correspondant à la difference entre les pas du filetage(P7)et(P8)des deux portions filétées des arbre(5).

Un dispositif réalisé conformément à l'invention ayant les arbres(5)dont les portions filétées(7) et(8)ont le pas P7 = 39,06 mm et le pas P8=40mm réalise le déplacement entre les cylindres(3)et (4)de 0,04 mm à chaque tour des arbres(5). Avec le dispositif de démultiplication comprenant la vis sans fin(17)et la roue hélicoidale(18)ayant 40 dents, le déplacement entre(3)et(4) à chaque tour de la vis(17) est de 0,001 mm.

- 6 -

REVENDICATIONS DE BREVET

1) Méthode permettant l'obtention de déplacements coaxials même micromètriques entre deux parties mobiles d'une machine même sous une sollicitation antagoniste très forte, caractérisé par le fait qu'il entraîne de tranporter coaxialment, dans le même sens mais avec vitesse differente les deux parties mobiles(1)et(2)de la machine par le moyen du roulement d'au moins un arbre de manoeuvre(5)qui est pourvu de deux portions saillant,filétées(7)et(8) ayant le filet de sens identique,mais de pas different et engageant coaxialment les deux parties mobiles de la machine au moyen de deux écroux(9)et(10) dont les filetages ont les mêmes caracteristiques géométriques des correspondantes portions filétées (7)et(8)de l'arbre de manoeuvre(5)de sorte que le déplacement entre (1)et(2)voulu par chaque tour de l'arbre(5)est directement détérminé par la difference entre les pas du filetage des deux portions filetées(7)et(8)de l'arbre(5).

2) Dispositif permettant l'obtention de déplacements coaxials même micromètriques entre deux parties mobiles d'une machine même sous une sollicitation antagoniste très forte caractérisé par le fait qu'il comprend au moins un arbre de manoeuvre(5)pourvu de deux portions saillant filétées(7)et(8)ayant le filet de sens égal mais de pas different et engageant, rispectivement,les deux parties mobiles (1)et(2)de la machine au moyen de deux écroux(9) et(10)dont les filetages ont les mêmes caracteristiques géomètriques des correspondantes portions fi-

0009470

letées(7)et(8)de l'arbre(5).

3) Dispositif selon 2 caractérisé par le fait que l'arbre de manoeuvre(5)est roulé directement au moyen d'un volant ou par l'entremise d'un mécanisme de démultiplication.

4) Une machine quelconque ayant deux parties mobiles entre elles coaxialment cractérisée par le fait qu'elle comprend un dispositif selon 2 et 3.

**Fig. 1**

1/4

Office européen
des brevets

**RAPPORT DE RECHERCHE EUROPEENNE**

0009470
Numéro de la demande

EP 79 830 025.7

| Catégorie | Citation du document avec indication, en cas de besoin, des parties pertinentes | Revendication concernée |
|---|---|---|
| | CH - A - 270 608 (R. SCHWEIZER) <br> * page 1, lignes 24 à 52 * <br> -- | 1,2 |
| | DE - A - 1 938 723 (MOELLER & NEUMANN) <br> * pages 3 et 4; fig. * <br> -- | 1-3 |
| | DE - C - 486 171 (MANNESMANNRÖHREN- WERKE) <br> * document complet * <br> -- | 1,2 |
| A | DE - C - 952 673 (SCHIESS AG) <br> * page 2, lignes 97 à 124; fig. 1 * <br> -- | 1,2 |
| A | DE - C - 596 109 (SCHLOEMANN AG) <br> * document complet * <br> -- | 1 |
| A | US - A - 2 485 280 (J.F. GRACE) <br> * revendication 1 * <br> ---- | 1 |

**DOCUMENTS CONSIDERES COMME PERTINENTS**

**CLASSEMENT DE LA DEMANDE (Int. Cl.3)**

B 21 B 31/24
B 23 Q 1/26

**DOMAINES TECHNIQUES RECHERCHES (Int. Cl.3)**

B 21 B 31/00
B 23 Q 1/26
B 29 D 7/14
B 41 F 13/34
D 21 G 1/02
F 16 B 39/16

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

X Le présent rapport de recherche a été établi pour toutes les revendications

| Lieu de la recherche | Date d'achèvement de la recherche | Examinateur |
|---|---|---|
| Berlin | 10-12-1979 | MARTIN |

OEB Form 1503.1  06.78